# EUROPEAN PATENT SPECIFICATION

(11) **EP 4 089 137 B1**
(45) Date of publication and mention of the grant of the patent: **23.04.2025**
(21) Application number: 20912006.2
(22) Date of filing: 07.01.2020
(51) Int. Cl.: C08J 3/12, C08K 5/10, C08L 67/02, C08J 3/20, C08K 5/101

(54) **POLYBUTYLENE TEREPHTHALATE RESIN PELLET HAVING IMPROVED METERABILITY**
POLYBUTYLENTEREPHTHALAT-HARZGRANULAT MIT VERBESSERTER DOSIERBARKEIT
GRANULES DE RÉSINE POLY(BUTYLÈNE TÉRÉPHTALATE) PRÉSENTANT DES CARACTÉRISTIQUES DE MESURE AMÉLIORÉES

(43) Date of publication of application: 16.11.2022
(73) Proprietor: Polyplastics Co., Ltd., Tokyo 108-8280 (JP)
(72) Inventor: SAITO, Itsuki, Fuji-shi, Shizuoka 416-8533 (JP); GOSHIMA, Kazuya, Fuji-shi, Shizuoka 416-8533 (JP); SEKIGUCHI, Dai, Fuji-shi, Shizuoka 416-8533 (JP); ARAKI, Kazuhiro, Fuji-shi, Shizuoka 416-8533 (JP)
(74) Representative: Winter, Brandl - Partnerschaft mbB
(86) International application number: PCT/JP2020/000120
(87) International publication number: WO 2021/140557

(56) References cited:
- EP-A1- 2 177 567
- EP-A1- 2 653 498
- WO-A1-2012/081381
- JP-A- 2001 247 682
- JP-A- 2013 010 856
- JP-A- 2015 044 363
- JP-A- 2015 044 363
- JP-A- 2020 033 500
- JP-A- 2020 033 501
- JP-A- H0 953 005
- JP-A- H05 147 026
- DATABASE WPI Week 201521, 12 March 2015 Derwent World Patents Index; AN 2015-20692B, XP002808050
- DATABASE WPI Week 201308, 17 January 2017 Derwent World Patents Index; AN 2013-A92928, XP002808051

## Description

### TECHNICAL FIELD

The present invention pertains to a polybutylene terephthalate resin pellet having improved meterability and good in-dryer accretions.

### BACKGROUND ART

Polybutylene terephthalate resins (PBT resins) have various excellent properties such as mechanical properties, electrical properties, and thermal resistance and are therefore widely used as engineering plastics in diverse applications such as automotive components and electrical/electronic device components.

WO 2012/081381 A1 (EP 2 653 498 A1) provides a PBT resin composition.

JP 2015 044363 A relates to a thermoplastic aromatic polyester resin pellet made of a thermoplastic aromatic polyester resin composition.

JP H09 53005 A is directed to a PBT resin composition pellet excellent in molding stability, heat resistance, rigidity and toughness.

JP 2001 247682 A relates to a resin pellet mixture.

JP H05 147026 A describes a molding PBT.

JP 2013 010856 A relates to a thermoplastic resin composition comprising a PBT resin, polyethylene terephthalate (PET) resin, an inorganic filler and a mold release agent.

EP 2 177 567 A1 relates to a PBT resin composition.

Injection molding is an example of a method for obtaining a molded article from a polybutylene terephthalate resin. As methods to increase productivity, that is, the quantity produced per unit time in injection molding, there are methods for increasing the number of molded articles obtained per shot by increasing the number of cavities per mold. Conversely, methods for increasing the number of shots per unit time by shortening the molding cycle time per shot are also effective.

Here, in shortening the molding cycle time, there are methods for lowering the temperature of the mold to shorten the cooling time and methods for increasing the injection rate to shorten the injection time. However, there are concerns that shortening the cooling time is connected not only to insufficient crystallization of molded articles, but to deterioration of physical properties, and injection at high speeds can also be the cause of poor external appearance due to jetting and gas burns. Thus, as a process with little effect on the properties of molded articles, shortening the "measurement time" to measure one shot of molten resin in a cylinder is a preferred method.

### SUMMARY OF INVENTION

### TECHNICAL PROBLEM

The present invention addresses the problem of providing a polybutylene terephthalate resin pellet with improved meterability, capable of shortening the "measurement time" to measure one shot of molten resin in a cylinder when injection molding a polybutylene terephthalate resin to obtain a molded article.

### SOLUTION TO PROBLEM

As a result of diligent investigation, the present inventors found that the abovementioned problem can be solved by a polybutylene terephthalate resin pellet comprising a polybutylene terephthalate resin and a lubricant, wherein the amount of the lubricant leached to the pellet surface is set to a specific range, completing the present invention.

The content of the lubricant is 0.05 to 0.30 % by mass of the total mass of the polybutylene terephthalate resin pellet.

By setting the amount of the leached lubricant to a certain specific low range, this also solved the occurrence of problems such as the leached lubricant adhering to the interior of dryers in cases in which the amount of leached lubricant is high (for example, when the amount of lubricant added was increased or the pre-drying time before molding was lengthened).

Moreover, the infrared spectrum peak intensity derived from the lubricant with respect to the infrared spectrum peak intensity derived from the polybutylene terephthalate resin (absorption at 2850 cm⁻¹/absorption at 1019 cm⁻¹) after pre-drying and before loading in a molding machine is 0.005 or greater and 0.055 or less.

The present invention is defined in the claims.

### EFFECTS OF INVENTION

According to the present invention, a polybutylene terephthalate resin pellet with improved meterability, and good in-dryer accretions capable of shortening the "measurement time" to measure one shot of molten resin in a cylinder when obtaining a molded article from a polybutylene terephthalate resin by performing injection molding can be provided.

### DESCRIPTION OF EMBODIMENTS

An embodiment of the present invention shall be explained in detail below. The present invention is not limited by the following embodiment and can be carried out with the addition of appropriate modifications so long as the effects of the present invention are not hindered.

### [Polybutylene Terephthalate Resin Pellet]

The polybutylene terephthalate resin pellet of the present invention is characterized by comprising a polybutylene terephthalate resin and a lubricant and by the infrared spectrum peak intensity derived from the lubricant with respect to the infrared spectrum peak intensity derived from the polybutylene terephthalate resin (absorption at 2850 cm⁻¹/absorption at 1019 cm⁻¹) after pre-drying and before loading in a molding machine being 0.005 or greater and 0.055 or less.

Moreover, the content of the lubricant is 0.05 to 0.30 % by mass of the total mass of the polybutylene terephthalate resin pellet.

In one embodiment of the present invention, the infrared spectrum peak intensity derived from the lubricant with respect to the infrared spectrum peak intensity derived from the polybutylene terephthalate resin (absorption at 2850 cm⁻¹/absorption at 1019 cm⁻¹) of the polybutylene terephthalate resin pellet after pre-drying and before loading in a molding machine is preferably 0.006 or greater and 0.050 or less, more preferably 0.007 or greater and 0.040 or less, and still more preferably 0.008 or greater and 0.030 or less.

The infrared spectrum peak intensity derived from the crystallized polybutylene terephthalate resin with respect to the infrared spectrum peak intensity derived from the entire polybutylene terephthalate resin (absorption at 917 cm⁻¹/absorption at 1019 cm⁻¹) of the polybutylene terephthalate resin pellet of the present invention, in a surface-crystallized state before pre-drying, is preferably 0.180 or greater and 1.000 or less, more preferably 0.200 or greater and 0.950 or less, still more preferably 0.220 or greater and 0.900 or less, and especially preferably 0.250 or greater and 0.850 or less.

Moreover, the lubricant used in the polybutylene terephthalate resin pellet of the present invention is preferably a fatty acid ester.

Furthermore, the temperature of the polybutylene terephthalate resin pellet of the present invention immediately after strand cutting is preferably 70°C or greater, more preferably 80°C or greater, and still more preferably 90°C or greater. However, when the temperature of the pellet is increased, the strand temperature also increases, so there is the possibility that strand pulling when cutting will become unstable and therefore the temperature of the pellet immediately after extrusion is preferably 150°C or less.

Further, the polybutylene terephthalate resin pellet of the present invention preferably does not contain an inorganic filler.

### (Polybutylene Terephthalate Resins)

Polybutylene terephthalate resins (PBT resins) are obtained by polycondensing a dicarboxylic acid component comprising at least terephthalic acid or an ester-forming derivative thereof (a C₁₋₆ alkylester, an acid halide, etc.) and a glycol component comprising an alkylene glycol with at least 4 carbon atoms (1,4-butanediol) or an ester-forming derivative thereof (an acetylate, etc.). In the present embodiment, the polybutylene terephthalate resin is not limited to homopolybutylene terephthalate resins and may be a copolymer containing 60 mol% or greater butylene terephthalate units.

The amount of terminal carboxyl groups of the polybutylene terephthalate resin is not particularly limited so long as the objective of the present invention is not hindered but is preferably 30 meq/kg or less and more preferably 25 meq/kg or less.

The intrinsic viscosity of the polybutylene terephthalate resin is not particularly limited so long as the objective of the present invention is not hindered, but is preferably 0.60 dL/g or greater and 1.2 dL/g or less and more preferably 0.65 dL/g or greater and 0.9 dL/g or less. When a polybutylene terephthalate resin with an intrinsic viscosity in such a range is used, the obtained polybutylene terephthalate resin composition has particularly excellent moldability. Further, the intrinsic viscosity can be adjusted by blending polybutylene terephthalate resins having different intrinsic viscosities. For example, by blending a polybutylene terephthalate resin having an intrinsic viscosity of 1.0 dL/g with a polybutylene terephthalate resin having an intrinsic viscosity of 0.7 dL/g, a polybutylene terephthalate resin having an intrinsic viscosity of 0.9 dL/g can be prepared. The intrinsic viscosity of the polybutylene terephthalate resin can be measured under conditions of, for example, a temperature of 35°C in o-chlorophenol.

In preparing the polybutylene terephthalate resin, when using an aromatic dicarboxylic acid other than terephthalic acid or an ester-forming derivative thereof as a comonomer component, for example, a C₈₋₁₄ aromatic dicarboxylic acid such as isophthalic acid, phthalic acid, 2,6-naphthalenedicarboxylic acid, or 4,4'-dicarboxydiphenylether; a C₄₋₁₆ alkanedicarboxylic acid such as succinic acid, adipic acid, azelaic acid, or sebacic acid; a C₅₋₁₀ cycloalkanedicarboxylic acid such as cyclohexanedicarboxylic acid; or an ester-forming derivative of these dicarboxylic acid components (a C₁₋₆ alkylester derivative, an acid halide, etc.) can be used. These dicarboxylic acid components may be used alone or in a combination of two or more.

Among these dicarboxylic acid components, a C₈₋₁₂ aromatic dicarboxylic acid such as isophthalic acid and a C₆₋₁₂ alkanedicarboxylic acid such as adipic acid, azelaic acid, or sebacic acid are more preferred.

In preparing the polybutylene terephthalate resin, when using a glycol component other than 1,4-butanediol as a comonomer component, for example, a C₂₋₁₀ alkylene glycol such as ethylene glycol, propylene glycol, trimethylene glycol, 1,3-butylene glycol, hexamethylene glycol, neopentyl glycol, or 1,3-octanediol; a polyoxyalkylene glycol such as diethylene glycol, triethylene glycol, or dipropylene glycol; an alicyclic diol such as cyclohexanedimethanol or hydrogenated bisphenol A; an aromatic diol such as bisphenol A or 4,4'-dihydroxybiphenyl; a C₂₋₄ alkylene oxide adduct of bisphenol A such as an ethylene oxide 2-mol adduct of bisphenol A or a propylene oxide 3-mol adduct of bisphenol A; or an ester-forming derivative of these glycols (an acetylate, etc.) can be used. These glycol components may be used alone or in a combination of two or more.

Among these glycol components, a C₂₋₆ alkylene glycol such as ethylene glycol or trimethylene glycol, a polyoxyalkylene glycol such as diethylene glycol, an alicyclic diol such as cyclohexanedimethanol, etc. is more preferred.

As comonomer components that can be used beyond the dicarboxylic acid component and the glycol component, there are, for example, aromatic hydroxycarboxylic acids such as 4-hydroxybenzoic acid, 3-hydroxybenzoic acid, 6-hydroxy-2-naphthoic acid, and 4-carboxy-4'-hydroxybiphenyl; aliphatic hydroxycarboxylic acids such as glycolic acid and hydroxycaproic acid; C₃₋₁₂ lactones such as propiolactones, butyrolactones, valerolactones, and caprolactones (ε-caprolactone, etc.); and ester-forming derivatives of these comonomer components (C₁₋₆ alkylester derivatives, acid halides, acetylates, etc.).

The content of the polybutylene terephthalate resin is preferably 10-90% by mass of the total mass of the polybutylene terephthalate resin pellet, more preferably 20-80% by mass, and still more preferably 30-70% by mass.

### (Lubricant)

The polybutylene terephthalate resin pellet of the present invention contains a lubricant. Examples of lubricants include fatty acids, fatty acid metal salts, hydroxy-fatty acids, paraffins, low-molecular-weight polyolefins, fatty acid amides, aliphatic ketones, partially saponified fatty acid esters, fatty acid lower alcohol esters, fatty acid polyalcohol esters, fatty acid polyglycol esters, modified silicones, etc.

The content of the lubricant, if the infrared spectrum peak intensity derived from the lubricant with respect to the infrared spectrum peak intensity derived from the polybutylene terephthalate resin (absorption at 2850 cm⁻¹/absorption at 1019 cm⁻¹) of the polybutylene terephthalate resin after pre-drying and before loading in a molding machine is 0.005 or greater and 0.055 or less, is 0.05-0.30% by mass of the total mass of the polybutylene terephthalate resin pellet.

Fatty acids with 6-40 carbon atoms are preferable as the fatty acid and specifically, examples thereof include oleic acid, stearic acid, lauric acid, hydroxystearic acid, behenic acid, arachidonic acid, linolic acid, linolenic acid, ricinoleic acid, palmitic acid, montanic acid, mixtures of these, etc. As fatty acid metal salts, alkali metal salts and alkali earth metal salts of fatty acids with 6-40 carbon atoms are preferred and specifically, examples thereof include calcium stearate, sodium montanate, calcium montanate, etc.

Examples of hydroxy-fatty acids include 1,2-hydroxystearic acid, etc. As paraffins, those with 18 or more carbon atoms are preferred and examples thereof include liquid paraffins, natural paraffins, microcrystalline waxes, petrolactums, etc.

As low-molecular-weight polyolefins, for example, those with a molecular weight of 5,000 or less are preferred and specifically, examples thereof include polyethylene waxes, maleic acid-modified polyethylene waxes, oxidized-type polyethylene waxes, chlorinated polyethylene waxes, polypropylene waxes, etc.

As fatty acid amides, those with 6 or more carbon atoms are preferred and specifically, examples thereof include oleic acid amide, erucic acid amide, behenic acid amide, methylene bisstearic acid amide, N,N-bis(2-hydroxyethyl)stearic acid amide, etc.

As aliphatic ketones, those with 6 or more carbon atoms are preferred and examples thereof include higher aliphatic ketones, etc.

Examples of partially saponified fatty acid esters include partially saponified montanic acid esters, etc.

Examples of fatty acid lower alcohol esters include stearic acid esters, oleic acid esters, linolic acid esters, linolenic acid esters, adipic acid esters, behenic acid esters, arachidonic acid esters, montanic acid esters, isostearic acid esters, etc. These may also be mixed esters using multiple fatty acids and/or lower alcohols.

Examples of fatty acid polyalcohol esters include (poly)glycerine tristearate, (poly)glycerine distearate, (poly)glycerine monostearate, (poly)pentaerythritol tetrastearate, (poly)pentaerythritol tristearate, (poly)pentaerythritol distearate, (poly)pentaerythritol monostearate, (poly)pentaerythritol adipate stearate, behenic acid sorbitan esters, etc. These may also be mixed esters using multiple fatty acids and/or polyalcohols.

Examples of fatty acid polyglycol esters include fatty acid polyethylene glycol esters, fatty acid polypropylene glycol esters, etc.

Examples of modified silicones include polyether-modified silicones, higher fatty acid alkoxy-modified silicones, higher fatty acid-containing silicones, higher fatty acid ester-modified silicones, methacrylic-modified silicones, fluorine-modified silicones, etc.

Examples of preferred lubricants include, e.g., fatty acid metal salts, low-molecular-weight polyolefins, fatty acid amides, partially saponified fatty acid esters, fatty acid lower alcohol esters, fatty acid polyalcohol esters, etc. Among these, low-molecular-weight polyolefins, fatty acid polyalcohol esters, and fatty acid amides are more preferable. Within these, polyethylene waxes, adipic acid esters, montanic acid esters, behenic acid esters, stearic acid esters, fatty acid glycerine esters, fatty acid pentaerythritol esters, fatty acid trimethylolpropane esters, fatty acid sorbitan esters, and ethylene bisstearic acid amides are still more preferable, and mixed esters of trimethylolpropane, montanic acid, and adipic acid, stearic acid glycerine esters, behenic acid glycerine esters, and stearic acid pentaerythritol esters are especially preferable.

### (Filler)

A filler is used, as necessary, in the polybutylene terephthalate resin pellet of the present invention. Such a filler is preferably blended in order to obtain excellent properties in performance such as mechanical strength, thermal resistance, dimensional stability, and electrical properties and is particularly effective for the purpose of increasing rigidity. In accordance with the objective, a fibrous, granular, or tabular filler is used.

Examples of fibrous fillers include glass fibers with round cross sections, asbestos fibers, carbon fibers, silica fibers, silica/alumina fibers, zirconia fibers, potassium titanate fibers, and further, metal fibrous materials such as stainless steel, aluminum, titanium, copper, and brass, etc. High-melting point organic fibrous substances such as fluorine resins and acrylic resins can also be used.

Examples of granular fillers include glass beads, glass powder, quartz powder, kaolin, clay, diatomaceous earth, wollastonite, iron oxide, titanium oxide, alumina, calcium carbonate, magnesium carbonate, calcium sulfate, and barium sulfate as well as silicon oxide, silicon nitride, various metal powders, etc.

Further, examples of tabular fillers include mica, glass flakes, various metal foils, etc.

The type of the filler is not particularly limited, and one or more types of filler can be added.

The amount of the filler added is not particularly specified, but is preferably 200 parts by mass or less with respect to 100 parts by mass of the polybutylene terephthalate resin pellet, more preferably 10 parts by mass or greater and 150 parts or less, and still more preferably 20 parts by mass or greater and 100 parts by mass or less. When the filler is added in excess, inferior moldability and decreases in toughness are observed.

### (Additives)

Publicly known substances that are commonly added to thermoplastic resins and the like can further be added and used in combination with the polybutylene terephthalate resin pellet of the present invention in accordance with the objective thereof. Any of, for example, an antioxidant, an ultraviolet absorbing agent, a stabilizer such as a photostabilizer, an anti-static agent, a mold release agent, a nucleating agent (talc, etc.), a colorant such as a dye or pigment (carbon black, etc.), a plasticizing agent, a fluidity-improving agent, a toughness-improving agent, a hydrolysis resistance-improving agent (epoxy, carbodiimide, etc.) and an auxiliary agent thereof (potassium acetate, etc.), other resins, etc. can be blended.

The content of the additive is not particularly limited, but when another resin is added, the content is preferably 30% by mass or less of the total mass of the polybutylene terephthalate resin pellet, more preferably 1-20% by mass, and still more preferably 5-10% by mass. Further, when an additive other than another resin is added, the total amount thereof is preferably 0.05-10% by mass of the total mass of the polybutylene terephthalate resin pellet, more preferably 0.1-5% by mass, and still more preferably 0.5-3% by mass.

### (Examples)

The present invention will be explained specifically with the following examples, but the present invention is not limited by these examples so long as the gist thereof is not exceeded. Evaluation of the properties was performed with the following methods.

### (1) Evaluation of the amount of lubricant present on the pellet surface (amount of the lubricant leached)

Using a Hyperion 3000 manufactured by Bruker Japan K.K. as a measuring device, the irradiation area was set to 100 µm × 100 µm and infrared spectrum measurement was performed using 10 pellets of each of the examples and comparative examples obtained with the methods described below. The peak derived from the polybutylene terephthalate resin and the peak derived from the lubricant respectively correspond to those at 1019 cm⁻¹ and 2850 cm⁻¹ and the peak intensity derived from the lubricant with respect to the peak intensity derived from the polybutylene terephthalate resin (2850/1019) was determined. The results are shown in Tables 1-4.

### (2) Evaluation of the degree of surface crystallization of the pellet

Using a Hyperion 3000 manufactured by Bruker Japan K.K. as a measuring device, the irradiation area was set to 100 µm × 100 µm and infrared spectrum measurement was performed using 10 pellets of each of the examples and comparative examples obtained with the methods described below. The peak derived from the entire polybutylene terephthalate resin and the peak derived from the crystallized polybutylene terephthalate resin respectively correspond to those at 1019 cm⁻¹ and 917 cm⁻¹ and the peak intensity derived from the crystallized polybutylene terephthalate resin with respect to the peak intensity derived from the entire polybutylene terephthalate resin (917/1019) was determined. The results are shown in Tables 1-4.

### (3) Evaluation of meterability

After pre-drying pellets of each of the examples and comparative examples obtained with the methods described below at 140°C for the drying times (hr) shown in Tables 1-4, the variation in measurement time when molding 127 mm × 12.7 mm × 1.6 mm strip-shaped test pieces under the following molding conditions using a molding machine ("ROBOSHOT S-2000i 100B" manufactured by FANUC CORPORATION, screw diameter: ø 28 mm) was measured. 50 shots were performed, and the average measurement time was calculated as well as the standard deviation of the measurement time as variance (σ).

### [Molding Conditions]

Cylinder temperature: 260°C
Mold temperature: 60°C
Injection rate: 20 mm/sec
Hold pressure: 50 MPa
Measurement stroke: 21 mm
Screw revolution speed: 80 rpm
Back pressure: 3 MPa

Regarding the evaluation of meterability, those of Examples 1-9 and Comparative Examples 1-18 for which the measurement time was 4 seconds or less were considered "good" and those for which the measurement time exceeded 4 seconds were considered "poor". Further, for Examples 10-13 and Comparative Examples 19-24, which were produced with a mold different from that of Examples 1-9 and Comparative Examples 1-18, those for which the measurement time was 5 seconds or less were considered "good", those for which the measurement time exceeded 5 seconds and was 6 seconds or less were considered "fair", and those for which the measurement time exceeded 6 seconds were considered "poor".

### (4) Evaluation of maintainability

After the pre-drying of the pellets in (3) the evaluation of meterability was performed, the presence or absence of lubricant-derived accretions in the dryer was visually observed. Cases in which accretions were not confirmed were evaluated as "good" and those in which accretions were confirmed were evaluated as "poor".

### (Pellet Manufacturing)

Materials in which the components shown in Tables 1-4 were dry blended in the compositions (% by mass) shown in the same were fed to the extruders shown in Tables 1-4, melt-kneaded with a cylinder temperature of 250°C at the immersion distances (cm), screw revolution speeds (rpm), and discharge amounts (kg/hr) shown in Tables 1-4 and the obtained pellets containing a polybutylene terephthalate resin and a lubricant were made into test pieces to be used in the evaluations described above. Here, the immersion distance indicates the length of the cooling water tank before a strand of the melt-kneaded material extruded from the die of an extruder is pelletized (cut). The longer the immersion distance, the more the strand cooling is accelerated and the lower the surface temperature at which the material is pelletized, so crystallization of the pellet surface does not readily progress, and the pellets have a low degree of surface crystallization. Further, a smaller discharge amount means a lower speed at which the strands are discharged and, even with the same cooling water tank length, the transit time increases and strand cooling is accelerated, so the degree of surface crystallization on the pellets is low. Normally, the higher the screw revolution speed the greater the extrusion amount. For the temperature of the pellets immediately after strand cutting in the present invention, 1 kg of the pelletized pellets of the examples and comparative examples immediately after strand cutting were gathered and the temperature near the central portion thereof was measured with a contact thermometer. The results of the measurements are shown collectively as the pellet temperature (°C) in Tables 1-4. Here, the time required to gather 1 kg of pellets varies with the discharge amount, but because this varies on the order of several seconds to several minutes, decreases in temperature while gathering can be ignored.

**[Table 1]**

| | EXAMPLE 1 | EXAMPLE 2 | EXAMPLE 3* | COMPARATIVE EXAMPLE 1 | COMPARATIVE EXAMPLE 2 | EXAMPLE4* | COMPARATIVE EXAMPLE 3 | COMPARATIVE EXAMPLE 4 | EXAMPLE 5* | COMPARATIVE EXAMPLE 5 | COMPARATIVE EXAMPLE 6 | COMPARATIVE EXAMPLE 7 | COMPARATIVE EXAMPLE 8 |
|---|---|---|---|---|---|---|---|---|---|---|---|---|---|
| PBT | 95.95 | 95.95 | 95.95 | 95.95 | 95.95 | 95.95 | 95.95 | 95.95 | 95.95 | 95.85 | 95.85 | 95.75 | 95.75 |
| FATTY ACID ESTER 1 | 0.20 | 0.20 | 0.20 | 0.20 | 0.20 | 0.20 | 0.20 | 0.20 | 0.20 | 0.30 | 0.30 | 0.40 | 0.40 |
| ANTIOXIDANT | 0.20 | 0.20 | 0.20 | 0.20 | 0.20 | 0.20 | 0.20 | 0.20 | 0.20 | 0.20 | 0.20 | 0.20 | 0.20 |
| STABILIZER | 0.05 | 0.05 | 0.05 | 0.05 | 0.05 | 0.05 | 0.05 | 0.05 | 0.05 | 0.05 | 0.05 | 0.05 | 0.05 |
| CARBODIIMIDE | 0.30 | 0.30 | 0.30 | 0.30 | 0.30 | 0.30 | 0.30 | 0.30 | 0.30 | 0.30 | 0.30 | 0.30 | 0.30 |
| POTASSIUM ACETATE | 3.00 | 3.00 | 3.00 | 3.00 | 3.00 | 3.00 | 3.00 | 3.00 | 3.00 | 3.00 | 3.00 | 3.00 | 3.00 |
| CARBON BLACK | 0.30 | 0.30 | 0.30 | 0.30 | 0.30 | 0.30 | 0.30 | 0.30 | 0.30 | 0.30 | 0.30 | 0.30 | 0.30 |

| MANUFACTURING CONDITIONS | | | | | | | | | | | | | |
|---|---|---|---|---|---|---|---|---|---|---|---|---|---|
| EXTRUDER | TEX44α II MANUFACTURED BY THE JAPAN STEEL WORKS, LTD. | | | | | | | | | | | | |
| SCREW DIAMETER (mm) | 47 mm | | | | | | | | | | | | |
| IMMERSION DISTANCE (cm) | 24 | | | 189 | | | 283 | | | 105 | | | |
| SCREW REVOLUTION SPEED (rpm) | 360 | 360 | 360 | 360 | 360 | 360 | 360 | 360 | 360 | 360 | 360 | 360 | 360 |
| DISCHARGE AMOUNT (kg/hr) | 250 | 250 | 250 | 250 | 250 | 250 | 250 | 250 | 250 | 250 | 250 | 250 | 250 |
| PELLET TEMPERATURE (°C) | 159 | | | 113 | | | 78 | | | 110 | | | |

| IR MEASUREMENT RESULTS | | | | | | | | | | | | | |
|---|---|---|---|---|---|---|---|---|---|---|---|---|---|
| 917/1019 | 0.353 | | | 0.239 | | | 0.225 | | | 0.225 | | 0.237 | |
| DRYING TIME (hr) | 24 | 3 | 0 | 24 | 3 | 0 | 24 | 3 | 0 | 24 | 3 | 24 | 3 |
| 2850/1019 | 0.045 | 0.027 | 0.009 | 0.079 | 0.059 | 0.007 | 0.084 | 0.063 | 0.010 | 0.103 | 0.072 | 0.129 | 0.079 |

| METERABILITY EVALUATION | | | | | | | | | | | | | |
|---|---|---|---|---|---|---|---|---|---|---|---|---|---|
| MEASURING TIME (sec) | 3.7 | 3.7 | 3.6 | 4.1 | 4.7 | 3.5 | 3.6 | 4.8 | 3.5 | 3.4 | 4.9 | 3.4 | 5.4 |
| σ (sec) | 0.1 | 0.1 | 0.1 | 1.3 | 0.7 | 0.1 | 0.2 | 0.5 | 0.1 | 0.1 | 0.5 | 0.1 | 1.2 |
| METERABILITY JUDGMENT | GOOD | GOOD | GOOD | POOR | POOR | GOOD | GOOD | POOR | GOOD | GOOD | POOR | GOOD | POOR |

| MAINTAINABILITY | | | | | | | | | | | | | |
|---|---|---|---|---|---|---|---|---|---|---|---|---|---|
| IN-DRYER ACCRETIONS | GOOD | GOOD | GOOD | GOOD | GOOD | GOOD | POOR | GOOD | GOOD | POOR | GOOD | POOR | GOOD |

| | | | | | | | | | | | | | |
|---|---|---|---|---|---|---|---|---|---|---|---|---|---|
| *: Reference Example (not in accordance with the invention) | | | | | | | | | | | | | |

**[Table 2]**

| | COMPARATIVE EXAMPLE 9 | EXAMPLE 6 | COMPARATIVE EXAMPLE 10 | EXAMPLE 7 | COMPARATIVE EXAMPLE 11 | COMPARATIVE EXAMPLE 12 | COMPARATIVE EXAMPLE 13 | COMPARATIVE EXAMPLE 14 | COMPARATIVE EXAMPLE 15 | COMPARATIVE EXAMPLE 16 |
|---|---|---|---|---|---|---|---|---|---|---|
| PBT | 95.95 | 95.95 | 95.95 | 95.95 | 95.95 | 95.95 | 95.95 | 95.95 | 95.85 | 95.85 |
| FATTY ACID ESTER 1 | 0.20 | 0.20 | 0.20 | 0.20 | 0.20 | 0.20 | 0.20 | 0.20 | 0.30 | 0.30 |
| ANTIOXIDANT | 0.20 | 0.20 | 0.20 | 0.20 | 0.20 | 0.20 | 0.20 | 0.20 | 0.20 | 0.20 |
| STABILIZER | 0.05 | 0.05 | 0.05 | 0.05 | 0.05 | 0.05 | 0.05 | 0.05 | 0.05 | 0.05 |
| CARBODIIMIDE | 0.30 | 0.30 | 0.30 | 0.30 | 0.30 | 0.30 | 0.30 | 0.30 | 0.30 | 0.30 |
| POTASSIUM ACETATE | 3.00 | 3.00 | 3.00 | 3.00 | 3.00 | 3.00 | 3.00 | 3.00 | 3.00 | 3.00 |
| CARBON BLACK | 0.30 | 0.30 | 0.30 | 0.30 | 0.30 | 0.30 | 0.30 | 0.30 | 0.30 | 0.30 |

| MANUFACTURING CONDITIONS | | | | | | | | | | |
|---|---|---|---|---|---|---|---|---|---|---|
| EXTRUDER | STS 75 MANUFACTURED BY COPERION GmbH | | | | | | | | | |
| SCREW DIAMETER (mm) | 71 mm | | | | | | | | | |
| IMMERSION DISTANCE (cm) | 2250 | | 1150 | | 1150 | | 1150 | | 2250 | |
| SCREW REVOLUTION SPEED (rpm) | 490 | | 490 | | 360 | | 290 | | 490 | |
| DISCHARGE AMOUNT (kg/hr) | 1200 | | 1200 | | 900 | | 700 | | 1200 | |
| PELLET TEMPERATURE (°C) | 106 | | 128 | | 108 | | 85 | | 108 | |

| IR MEASUREMENT RESULTS | | | | | | | | | | |
|---|---|---|---|---|---|---|---|---|---|---|
| 917/1019 | 0.223 | | 0.261 | | 0.226 | | 0.220 | | 0.222 | |
| DRYING TIME (hr) | 24 | 3 | 24 | 3 | 24 | 3 | 24 | 3 | 24 | 3 |
| 2850/1019 | 0.100 | 0.045 | 0.087 | 0.052 | 0.115 | 0.056 | 0.112 | 0.060 | 0.136 | 0.070 |

| METERABILITY EVALUATION | | | | | | | | | | |
|---|---|---|---|---|---|---|---|---|---|---|
| MEASURING TIME (sec) | 3.8 | 3.9 | 3.7 | 3.6 | 3.9 | 4.4 | 3.4 | 4.2 | 4.0 | 4.7 |
| σ (sec) | 0.2 | 0.3 | 0.3 | 0.1 | 0.3 | 0.6 | 0.0 | 0.5 | 0.4 | 0.4 |
| METERABILITY JUDGMENT | GOOD | GOOD | GOOD | GOOD | GOOD | POOR | GOOD | POOR | GOOD | POOR |

| MAINTAINABILITY | | | | | | | | | | |
|---|---|---|---|---|---|---|---|---|---|---|
| IN-DRYER ACCRETIONS | POOR | GOOD | POOR | GOOD | POOR | GOOD | POOR | GOOD | POOR | GOOD |

**[Table 3]**

| | COMPARATIVE EXAMPLE 17 | EXAMPLE 8 | COMPARATIVE EXAMPLE 18 | EXAMPLE 9 |
|---|---|---|---|---|
| PBT | 95.95 | 95.95 | 95.95 | 95.95 |
| FATTY ACID ESTER 1 | 0.20 | 0.20 | 0.20 | 0.20 |
| ANTIOXIDANT | 0.20 | 0.20 | 0.20 | 0.20 |
| STABILIZER | 0.05 | 0.05 | 0.05 | 0.05 |
| CARBODIIMIDE | 0.30 | 0.30 | 0.30 | 0.30 |
| POTASSIUM ACETATE | 3.00 | 3.00 | 3.00 | 3.00 |
| CARBON BLACK | 0.30 | 0.30 | 0.30 | 0.30 |

| MANUFACTURING CONDITIONS | | | | |
|---|---|---|---|---|
| EXTRUDER | TEM-58SS MANUFACTURED BY TOSHIBA MACHINE CO., LTD. | | | |
| SCREW DIAMETER (mm) | 58 mm | | | |
| IMMERSION DISTANCE (cm) | 230 | | 125 | |
| SCREW REVOLUTION SPEED (rpm) | 500 | | 500 | |
| DISCHARGE AMOUNT (kg/hr) | 800 | | 600 | |
| PELLET TEMPERATURE (°C) | 86 | | 102 | |

| IR MEASUREMENT RESULTS | | | | |
|---|---|---|---|---|
| 917/1019 | 0.204 | | 0.216 | |
| DRYING TIME (hr) | 24 | 3 | 24 | 3 |
| 2850/1019 | 0.084 | 0.051 | 0.080 | 0.044 |

| METERABILITY EVALUATION | | | | |
|---|---|---|---|---|
| MEASURING TIME (see) | 3.4 | 3.8 | 3.8 | 3.6 |
| σ (sec) | 0.0 | 0.2 | 0.1 | 0.1 |
| METERABILITY JUDGMENT | GOOD | GOOD | GOOD | GOOD |

| MAINTAINABILITY | | | | |
|---|---|---|---|---|
| IN-DRYER ACCRETIONS | POOR | GOOD | POOR | GOOD |

**[Table 4]**

| | | COMPARATIVE EXAMPLE 19 | EXAMPLE 10 | EXAMPLE 11 | COMPARATIVE EXAMPLE 20 | COMPARATIVE EXAMPLE 21 | EXAMPLE 12 | COMPARATIVE EXAMPLE 22 | EXAMPLE 13 | "COMPARATIVE EXAMPLE 23 | COMPARATIVE EXAMPLE 24 |
|---|---|---|---|---|---|---|---|---|---|---|---|
| PBT | | 95.25 | 95.25 | 95.45 | 95.25 | 95.25 | 95.45 | 95.25 | 95.25 | 95.25 | 95.25 |
| LUBRICANT | FATTY ACID ESTER 1 | 0.40 | | | | | | | | | |
| | FATTY ACID ESTER 2 | | 0.40 | | | | | | | | |
| | FATTY ACID ESTER 3 | | | 0.20 | 0.40 | | | | | | |
| | FATTY ACID ESTER 4 | | | | | 0.40 | | | | | |
| | FATTY ACID ESTER 5 | | | | | | 0.20 | 0.40 | | | |
| | FATTY ACID AMIDE 1 | | | | | | | | 0.40 | | |
| | FATTY ACID AMIDE 2 | | | | | | | | | 0.40 | |
| | FATTY ACID AMIDE 3 | | | | | | | | | | 0.40 |
| TALC | | 0.50 | 0.50 | 0.50 | 0.50 | 0.50 | 0.50 | 0.50 | 0.50 | 0.50 | 0.50 |
| ANTIOXIDANT | | 0.20 | 0.20 | 0.20 | 0.20 | 0.20 | 0.20 | 0.20 | 0.20 | 0.20 | 0.20 |
| STABILIZER | | 0.05 | 0.05 | 0.05 | 0.05 | 0.05 | 0.05 | 0.05 | 0.05 | 0.05 | 0.05 |
| CARBODIIMIDE | | 0.30 | 0.30 | 0.30 | 0.30 | 0.30 | 0.30 | 0.30 | 0.30 | 0.30 | 0.30 |
| POTASSIUM ACETATE | | 3.00 | 3.00 | 3.00 | 3.00 | 3.00 | 3.00 | 3.00 | 3.00 | 3.00 | 3.00 |
| CARBON BLACK | | 0.30 | 0.30 | 0.30 | 0.30 | 0.30 | 0.30 | 0.30 | 0.30 | 0.30 | 0.30 |

| MANUFACTURING CONDITIONS | | | | | | | | | | | |
|---|---|---|---|---|---|---|---|---|---|---|---|
| EXTRUDER | | TEX30C MANUFACTURED BY THE JAPAN STEEL WORKS, LTD. | | | | | | | | | |
| SCREW DIAMETER (mm) | | 30 | | | | | | | | | |
| IMMERSION DISTANCE (cm) | | 30 | | | | | | | | | |
| SCREW REVOLUTION SPEED (rpm) | | 130 | | | | | | | | | |
| DISCHARGE AMOUNT (kg/hr) | | 15 | | | | | | | | | |
| PELLET TEMPERATURE (°C) | | 80 | | | | | | | | | |

| IR MEASUREMENT RESULTS | | | | | | | | | | | |
|---|---|---|---|---|---|---|---|---|---|---|---|
| 917/1019 | | 0.202 | 0.224 | 0.198 | 0.213 | 0.207 | 0.237 | 0.209 | 0.183 | 0.19 | 0.182 |
| DRYING TIME (hr) | | 3 | 3 | 3 | 3 | 3 | 3 | 3 | 3 | 3 | 3 |
| 2850/1019 | | 0.001 | 0.024 | 0.031 | 0.107 | 0.212 | 0.055 | 0.182 | 0.010 | 0.130 | 0.073 |

| METERABILITY EVALUATION | | | | | | | | | | | |
|---|---|---|---|---|---|---|---|---|---|---|---|
| MEASURING TIME (sec) | | 4.84 | 4.52 | 5.97 | 4.93 | 4.79 | 4.73 | 4.89 | 5.31 | 5.80 | 6.23 |
| σ (sec) | | 0.47 | 0.48 | 0.71 | 0.52 | 0.09 | 020 | 0.45 | 0.06 | 0.80 | 1.20 |
| METERABILITY JUDGMENT | | GOOD | GOOD | FAIR | GOOD | GOOD | GOOD | GOOD | FAIR | FAIR | POOR |

| MAINTAINABILITY | | | | | | | | | | | |
|---|---|---|---|---|---|---|---|---|---|---|---|
| IN-DRYER ACCRETIONS | | POOR | GOOD I | GOOD | POOR | POOR | GOOD | POOR | GOOD | POOR | GOOD |

| | | | | | | | | | | | |
|---|---|---|---|---|---|---|---|---|---|---|---|
| *: Reference Example (not in accordance with the invention) | | | | | | | | | | | |

The details of the components described in Tables 1-4 are as follows.
PBT Resin: Polybutylene terephthalate resin with a terminal carboxyl group concentration of 20 meq/kg and an intrinsic viscosity of 0.84 dL/g manufactured by Polyplastics Co, Ltd.
Fatty Acid Ester 1: RIKEMAL B-74 manufactured by RIKEN VITAMIN CO., LTD.
Fatty Acid Ester 2: Licolub WE 40 manufactured by RIKEN VITAMIN CO., LTD.
Fatty Acid Ester 3: Licowax E manufactured by Clariant Japan K.K.
Fatty Acid Ester 4: Licocare RBW 300 TP manufactured by Clariant Japan K.K.
Fatty Acid Ester 5: Licocare RBW 102 TP manufactured by Clariant Japan K.K.
Fatty Acid Amide 1: Light Amide WH-510K manufactured by KYOEISHA CHEMICAL Co., LTD.
Fatty Acid Amide 2: Light Amide WH-215 manufactured by KYOEISHA CHEMICAL Co., LTD.
Fatty Acid Amide 3: Light Amide WH-255 manufactured by KYOEISHA CHEMICAL Co., LTD.
Talc: Micron White #5000A manufactured by HAYASHI KASEI, CO., LTD.
Antioxidant: Irganox 1010 manufactured by BASF Japan Ltd.
Stabilizer: ADK STAB PEP-36 manufactured by ADEKA CORPORATION
Carbodiimide: Stabaxol P 400 manufactured by Rhein Chemie Japan Ltd.
Potassium Acetate: Masterbatch in which 0.1% by mass potassium acetate manufactured by FUJIFILM Wako Pure Chemical Corporation has been melt-kneaded in 99.9% by mass of the abovementioned PBT resin
Carbon Black: MA-600B manufactured by Mitsubishi Chemical Corporation

## Claims

1. A polybutylene terephthalate resin pellet comprising a polybutylene terephthalate resin and a lubricant,
wherein the content of the lubricant is 0.05 to 0.30 % by mass of the total mass of the polybutylene terephthalate resin pellet, and
wherein the infrared spectrum peak intensity derived from the lubricant with respect to the infrared spectrum peak intensity derived from the polybutylene terephthalate resin (absorption at 2850 cm⁻¹/absorption at 1019 cm⁻¹) after pre-drying and before loading in a molding machine is 0.005 or greater and 0.055 or less, wherein the infrared spectrum peak intensity is measured as described in the description.

2. The polybutylene terephthalate resin pellet according to claim 1, wherein, in a surface-crystallized state before pre-drying, the infrared spectrum peak intensity derived from the crystallized polybutylene terephthalate resin with respect to the infrared spectrum peak intensity derived from the entire polybutylene terephthalate resin (absorption at 917 cm⁻¹/absorption at 1019 cm⁻¹) is 0.200 or greater and 1.000 or less, wherein the infrared spectrum peak intensity is measured as described in the description.

3. The polybutylene terephthalate resin pellet according to claim 1 or 2, wherein the lubricant is a fatty acid ester.

4. The polybutylene terephthalate resin pellet according to any one of claims 1 to 3, wherein the polybutylene terephthalate resin pellet is free of an inorganic filler.

5. A process for producing a molded article from a polybutylene terephthalate resin by performing injection molding, wherein the injection molding is performed by using the polybutylene terephthalate resin pellet according to any one of claims 1 to 4.

## Patentansprüche

1. Polybutylenterephthalatharz-Pellet umfassend ein Polybutylenterephthalatharz und ein Schmiermittel,
wobei der Anteil des Schmiermittels 0,05 bis 0,30 Massenprozent der Gesamtmasse des Polybutylenterephthalatharz-Pellets beträgt und
wobei die Infrarotspektrums-Spitzenintensität, die von dem Schmiermittel in Bezug auf die Infrarotspektrums-Spitzenintensität abgeleitet ist, die von dem Polybutylenterephthalatharz abgeleitet ist (Absorption bei 2850 cm⁻¹/ Absorption bei 1019 cm⁻¹), nach Vortrocknen und vor Laden in eine Formmaschine 0,005 oder größer und 0,055 oder weniger ist, wobei die Infrarotspektrums-Spitzenintensität wie in der Beschreibung beschrieben gemessen wird.

2. Polybutylenterephthalatharz-Pellet gemäß Anspruch 1, wobei in einem oberflächenkristallinen Zustand vor Vortrocknen die Infrarotspektrums-Spitzenintensität, die von dem kristallisierten Polybutylenterephthalatharz in Bezug auf die Infrarotspektrums-Spitzenintensität abgeleitet ist, die von dem gesamten Polybutylenterephthalatharz abgeleitet ist (Absorption bei 917 cm⁻¹/ Absorption bei 1019 cm⁻¹), 0,200 oder mehr und 1,000 oder weniger beträgt, wobei die Infrarotspektrums-Spitzenintensität wie in der Beschreibung beschrieben gemessen wird.

3. Polybutylenterephthalatharz-Pellet gemäß Anspruch 1 oder 2, wobei das Schmiermittel ein Fettsäureester ist.

4. Polybutylenterephthalatharz-Pellet gemäß einem der Ansprüche 1 bis 3, wobei das Polybutylenterephthalatharz-Pellet frei von einem anorganischen Füllstoff ist.

5. Verfahren zum Herstellen eines Formteils aus einem Polybutylenterephthalatharz unter Durchführung von Spritzgießen, wobei das Spritzgießen unter Verwendung des Polybutylenterephthalatharz-Pellets gemäß einem der Ansprüche 1 bis 4 durchgeführt wird.

## Revendications

1. Granule de résine de polybutylène téréphtalate comprenant une résine de polybutylène téréphtalate et un lubrifiant,
dans lequel la teneur en lubrifiant est de 0,05 à 0,30 % en masse de la masse totale du granule de résine de polybutylène téréphtalate, et
dans lequel l'intensité maximale de spectre infrarouge issue du lubrifiant par rapport à l'intensité maximale de spectre infrarouge issue du granule de résine de polybutylène téréphtalate (absorption à 2 850 cm⁻¹/absorption à 1 019 cm⁻¹) après pré-séchage et avant chargement dans une machine à mouler est de 0,005 ou plus et de 0,055 ou moins, dans lequel l'intensité maximale de spectre infrarouge est mesurée comme décrit dans la description.

2. Granule de résine de polybutylène téréphtalate selon la revendication 1, dans lequel, dans un état cristallisé en surface avant pré-séchage, l'intensité maximale de spectre infrarouge issue du granule de résine de polybutylène téréphtalate cristallisé par rapport à l'intensité maximale de spectre infrarouge issue du granule de résine de polybutylène téréphtalate entier (absorption à 917 cm⁻¹/absorption à 1 019 cm⁻¹) est de 0,200 ou plus et de 1,000 ou moins, dans lequel l'intensité maximale de spectre infrarouge est mesurée comme décrit dans la description.

3. Granule de résine de polybutylène téréphtalate selon la revendication 1 ou 2, dans lequel le lubrifiant est un ester d'acide gras.

4. Granule de résine de polybutylène téréphtalate selon l'une quelconque des revendications 1 à 3, dans lequel le granule de résine de polybutylène téréphtalate est exempt de charge inorganique.

5. Processus de production d'un article moulé à partir d'une résine de polybutylène téréphtalate en effectuant un moulage par injection, dans lequel le moulage par injection est effectué en utilisant le granule de résine de polybutylène téréphtalate selon l'une quelconque des revendications 1 à 4.
